# EUROPÄISCHE PATENTSCHRIFT

(11) **EP 2 533 113 B1**
(45) Veröffentlichungstag und Bekanntmachung des Hinweises auf die Patenterteilung: **08.08.2018**
(21) Anmeldenummer: 11169495.6
(22) Anmeldetag: 10.06.2011
(51) Int. Cl.: G05B 19/042, H04L 29/06

(54) **Verfahren zum Betrieb eines Automatisierungsgerätes**
Method for operating an automation device
Procédé destiné au fonctionnement d'un appareil d'automatisation

(43) Veröffentlichungstag der Anmeldung: 12.12.2012
(73) Patentinhaber: Siemens Aktiengesellschaft, 80333 München (DE)
(72) Erfinder: Eckardt, Dieter, 91074 Herzogenaurach (DE)

(56) Entgegenhaltungen:
- EP-A1- 1 612 630
- US-A- 5 463 543
- US-A1- 2008 103 732
- US-B1- 6 560 235

## Beschreibung

Die Erfindung betrifft ein Verfahren zum Betrieb eines Automatisierungsgerätes, insbesondere in einer Ausführungsform als Antriebssteuerungsgerät. Weiter betrifft die Erfindung ein nach einem solchen Verfahren arbeitendes Automatisierungs- oder Antriebssteuerungsgerät und schließlich ein Computerprogramm zur Implementation eines solchen Verfahrens, das durch eine Verarbeitungseinheit eines Automatisierungs- oder Antriebssteuerungsgerät ausführbar ist.

Automatisierungs- oder Antriebssteuerungsgeräte sind an sich bekannt. Die Anmelderin bietet Automatisierungs- und Antriebssteuerungsgeräte verschiedener Funktions- und Leistungsklassen z.B. unter den Marken SIMATIC bzw. SINUMERIK an.

Bei Antriebssteuerungsgeräten oder allgemein bei Automatisierungsgeräten - im Folgenden zusammenfassend mitunter kurz nur als "Gerät" bezeichnet - ist ein vorgegebenes oder vorgebbares Verhalten im Hinblick auf äußere oder innere Ereignisse vorgesehen. Äußere Ereignisse können z.B. Ein/Aus-Befehle oder dergleichen sein. Als innere Ereignisse kommen z.B. Fehlermeldungen oder Warnmeldungen in Betracht. Zur Erzeugung einer Reaktion auf solche Ereignisse (das "Verhalten" des Gerätes) ist eine Zustandsmaschine in dem jeweiligen Gerät vorgesehen, die in Software, Firmware oder Kombinationen von Soft-, Firm- und Hardware implementiert sein kann. Die Zustandsmaschine verknüpft die äußeren und/oder inneren Ereignisse gemäß einer der Zustandsmaschine zugrunde liegenden Entscheidungslogik und leitet Folgereaktionen aus den äußeren und/oder inneren Ereignissen ab, zumindest einen sich nach der Entscheidungslogik der Zustandsmaschine ergebenden jeweiligen Zustand, der seinerseits Basis für Folgereaktionen sein kann. Der jeweilige Zustand beeinflusst gegebenenfalls die Ansprechbarkeit des Gerätes in einem Verbund mit anderen Geräten. Zum Beispiel kann ein Gerät mit dem Zustand "fehlerhaft" nicht zur Steuerung eines technischen Prozesses aktiviert werden.

Um ein Gerät der Eingangs genannten Art zum Betrieb in einem Verbund mit anderen Geräten mit einem externen Kommunikationssystem, z.B. einem Feldbus, beispielsweise dem unter der Marke PROFINET bekannten Feldbus/Kommunikationsstandard, verbinden zu können, muss das Gerät eine entsprechende Datenschnittstelle aufweisen. Diese Datenschnittstelle wird üblicherweise auf eine weitere, verallgemeinerte Datenschnittstelle im Gerät abgebildet, so dass das Gerät mit unterschiedlichen externen Kommunikationssystemen verwendbar ist, ohne dass dafür Eingriffe in das eigentliche Gerät erforderlich sind. Diese Datenschnittstelle wird im Folgenden zur Unterscheidung von der Datenschnittstelle für das externe Kommunikationssystem als interne verallgemeinerte Datenschnittstelle oder kurz als interne Datenschnittstelle bezeichnet. Die Datenschnittstelle für das externe Kommunikationssystem wird entsprechend kurz als externe Datenschnittstelle bezeichnet.

Nachteilig bei bekannten Geräten der eingangs genannten Art ist deren eher geringe Flexibilität hinsichtlich einer Möglichkeit eines Betriebs an unterschiedlichen Kommunikationssystemen. Dabei meint ein Betrieb an unterschiedlichen Kommunikationssystemen nicht einen mehrfach wechselnden Anschluss eines Gerätes an unterschiedliche Kommunikationssysteme sondern die grundsätzliche Eignung eines Gerätes - und damit die Eignung eines Gerätetyps oder einer Geräteklasse, zu der das jeweilige Gerät gehört - zum Betrieb an unterschiedlichen Kommunikationssystemen.

Die US 6 560 235 B1 lehrt ein universelles Kommunikationssystem, besteht aus einer Reihe von Kommunikationsmodulen, die Automatisierungsgeräte wie Steuerungen, Sensoren, Aktoren und Ein-/Ausgabekomponenten mit verschiedenen Kommunikationsnetzwerken verbinden. Jedes Kommunikationsmodul überträgt Daten zwischen einem Automatisierungsgerät und dem Kommunikationsnetz mit Hilfe von netzwerkspezifischen Diensten und Protokollen. Alle Kommunikationsmodule verfügen dabei über die gleiche physikalische, elektrische und logische Schnittstelle zum Automatisierungsgerät. Konfigurationsdaten, die die Darstellung des Automatisierungsgerät und seiner Daten im Netzwerk individuell anpassen, werden im Kommunikationsmodul in einem nichtflüchtigen Speicher abgelegt. Auf diese Weise kann ein einzelnes Automatisierungsgerät mehrere Netzwerktypen unterstützen, indem es die entsprechend konfigurierten Kommunikationsmodule verwendet.

Die US 5 463 543 A offenbart ein Steuerungssystem, welches eine Vorverarbeitungsschaltung enthält. Die Vorverarbeitungsschaltung erfasst Eingangssignale und wandelt diese in eine Vielzahl von Namen um. Eine Verarbeitungseinheit, die durch ein festes, vorprogrammiertes Programm gesteuert wird, kombiniert die Eingangsnamen mit vorprogrammierten Steuerwörtern aus einer Anwendungslogik-Tabelle, um daraus Ausgangsnamen zu erzeugen, welche jeweils für eine Steueraktion zur Steuerung eines Prozesses vorgesehen sind. Eine Nachverarbeitungsschaltung wandeln die Ausgangsnamen in Signale zur Steuerung des Prozesses um.

Eine Aufgabe der vorliegenden Erfindung besteht entsprechend darin, bei Geräten der eingangs genannten Art mit geringem Aufwand einen Betrieb an unterschiedlichen Kommunikationssystemen zu ermöglichen.

Diese Aufgabe wird erfindungsgemäß mit den Merkmalen des Anspruchs 1 gelöst. Dazu ist bei einem Verfahren zum Betrieb eines Automatisierungsgerätes, insbesondere einer Antriebssteuerungseinheit, wobei das Automatisierungsgerät als Funktionseinheiten zumindest eine interne Zustandsmaschine, eine interne Datenschnittstelle, eine Abbildungseinheit und eine Kommunikationsbaugruppe mit einer externen Datenschnittstelle umfasst, wobei die interne Datenschnittstelle hinsichtlich eines Informationsflusses im Automatisierungsgerät zwischen der internen Zustandsmaschine und der Abbildungseinheit und die Abbildungseinheit hinsichtlich desselben Informationsflusses zwischen der internen Datenschnittstelle und der externen Datenschnittstelle liegt, vorgesehen, dass Zustandsinformationen der internen Zustandsmaschine über die interne Datenschnittstelle an die Abbildungseinheit geleitet werden, wobei die Abbildungseinheit anhand der erhaltenen Zustandsinformationen die für das jeweilige Kommunikationssystem erforderlichen Zustandsinformationen in Form eigener, aus den erhaltenen Zustandsinformationen gewonnener Zustandsinformationen an einer Kommunikationseinheit der Kommunikationsbaugruppe bereit stellt.

Der Vorteil der Erfindung besteht vor allem in der Entkopplung der Generierung von Zustandsinformationen, wie sie für das jeweilige Kommunikationssystem beim Anschluss an die externe Datenschnittstelle benötigt werden, von der hier und im Folgenden als interne Zustandsmaschine bezeichneten Zustandsmaschine des Gerätes. Die Bezeichnung dieser Zustandsmaschine als interne Zustandsmaschine rechtfertigt sich aufgrund der funktionalen Position im Gerät, nämlich bezüglich des Kommunikationssystems auf einer der internen Datenschnittstelle gegenüberliegenden Seite.

Die hier als Vorteil erwähnte Entkopplung ist günstig, weil die interne Datenschnittstelle nicht dafür ausgelegt ist, das Geräteverhalten in beliebiger Form zu übertragen. Die interne Datenschnittstelle kann aber Informationen hinsichtlich eines gegenwärtigen Zustands des Gerätes, wie dieser durch die interne Zustandsmaschine dargestellt wird, übertragen (Zustandsinformationen). Des Weiteren kann die interne Datenschnittstelle selbstverständlich auch andere Daten und insoweit insbesondere auch Fehlermeldungen, Fehlercodes, usw. übertragen.

Eine im Gerät implementierte, interne Zustandsmaschine ist normalerweise durch ein bestimmtes Geräteprofil vorgegeben. Als übliches Geräteprofil kommt z.B. ein sogenanntes Profi-Drive-Profil in Betracht. Dieses kommt bei an Kommunikationssysteme nach dem Profibus- oder Profinet-Standard angeschlossenen Geräten zur Anwendung. Bei anderen Kommunikationssystemen ist dieses Geräteprofil im Allgemeinen nicht oder nur bedingt verwendbar. Insofern ist die oben erwähnte Entkopplung günstig, weil Zustände der internen Zustandsmaschine an die Abbildungseinheit geleitet werden, die aus den Zuständen der internen Zustandsmaschine eigene Zustandsinformationen erzeugt, wie sie beim Betrieb des Gerätes an dem jeweiligen Kommunikationssystem benötigt werden.

Unterschiedliche Kommunikationssysteme, insbesondere Feldbussysteme, besitzen üblicherweise unterschiedliche Geräteprofile und damit auch unterschiedliche Zustandsmaschinen. Zustandsmaschinen für ein Kommunikationssystem unterscheiden sich z.B. durch die Anzahl der Zustände und/oder die Art und Anzahl der Übergänge zwischen diesen Zuständen. Weil die geräteeigene, interne Zustandsmaschine sehr tief in das Gerät eingreift und damit sehr stark mit dem Gerät gleichsam verwoben ist, ist ein Austausch einer internen Zustandsmaschine mit erheblichem Aufwand verbunden. Zudem ergäbe sich mit jeder an ein Kommunikationssystem angepassten internen Zustandsmaschine eine spezifische Gerätereihe, da die spezifischen Eigenschaften des jeweiligen Kommunikationssystems und/oder des Geräteprofils nicht auf eine Kommunikationsanschaltbaugruppe oder kurz Kommunikationsbaugruppe beschränkt bleiben. Durch die Entkopplung bleibt die interne Zustandsmaschine in dem Gerät in unveränderter oder zumindest im Wesentlichen unveränderter Art und Weise erhalten, so dass keine besonderen Eingriffe in die Basisfunktionalität des jeweiligen Gerätes erforderlich sind.

Indem die Abbildungseinheit hinsichtlich des Informationsflusses im Gerät zwischen der internen und der externen Datenschnittstelle und damit hinsichtlich desselben Informationsflusses auf der gleichen Seite der internen Datenschnittstelle liegt wie die externe Datenschnittstelle, gelingt eine Bereitstellung der Zustände der tief im Gerät verborgenen Stati der internen Zustandsmaschine an einem Ort, an dem ein Zugriff durch die Kommunikationsbaugruppe möglich ist. Bei einem Betrieb des Gerätes an einem anderen Kommunikationssystem erfolgt eine entsprechende Generierung der für das jeweilige Kommunikationssystem erforderlichen Zustände in der Abbildungseinheit aus den Zustandsinformationen der internen Zustandsmaschine. Die so generierten externen Zustandsinformationen werden der Kommunikationseinheit zur Verfügung gestellt. Mit der Abbildungseinheit gelingt es, eine virtuelle Zustandsmaschine zu realisieren, auf die sowohl die Kommunikationseinheit Zugriff hat, als auch die für das jeweilige Feldbussystem notwendigen Zustände generiert. Insgesamt wird das Gerät damit grundsätzlich an beliebigen Kommunikationssystemen betreibbar

Wenn die Abbildungseinheit von der internen Zustandsmaschine erhaltene Zustände und/oder Zustandsinformationen zwischenspeichert oder sogar in einer gewissen Tiefe zwischenspeichert und die Abbildungseinheit auch gespeicherte Zustände bei der Generierung von Zustandsinformationen berücksichtigt, besteht die Möglichkeit, die von der Abbildungseinheit generierten Zustandsinformationen auch von Änderungen von Zuständen der internen Zustandsmaschine abhängig machen zu können. Im Weiteren lassen sich je nach Speichertiefe, immer komplexere Abhängigkeiten in der Abbildungseinheit realisieren bzw. nachbilden. Die Abbildungsfähigkeit der Zustände der internen Zustandsmaschine wird durch die gespeicherten Zustandsinformationen in der Abbildungseinheit umfangreicher. Die Speichertiefe kann dabei von Kommunikationssystem zu Kommunikationssystem unterschiedlich sein.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn neben Zuständen der internen Zustandsmaschine auch weitere Zusatzinformationen über die interne Datenschnittstelle an die Abbildungseinheit geleitet werden und die Abbildungseinheit auch diese Zusatzinformationen bei der Generierung von Zustandsinformationen berücksichtigt, wird die Abbildung der Zustände der internen Zustandsmaschine durch die Zustandsinformationen noch genauer, indem zum Beispiel ein über die interne Datenschnittstelle an die Abbildungseinheit übermittelter Zustand der internen Zustandsmaschine anhand einer Zusatzinformation in einen ersten oder einen zweiten Zustand abgebildet werden kann.

Die oben genannte Aufgabe wird auch mit einem Automatisierungsgerät, insbesondere einer Antriebssteuerungseinheit, zur Verwendung bei der Steuerung oder Beeinflussung technischer Prozesse gelöst, die nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Automatisierungsgerät, insbesondere eine Antriebssteuerungseinheit, in dessen bzw. deren Speicher als Mittel zur Durchführung des Verfahrens und seiner Ausgestaltungen ein solches Computerprogramm geladen oder ladbar ist.

Wenn das Automatisierungsgerät modular ausgeführt ist, so dass die Kommunikationsbaugruppe eine mit dem Automatisierungsgerät lösbar verbindbare Einheit ist, kann das Automatisierungsgerät mit geringem Aufwand durch einfachen Austausch der Kommunikationsbaugruppe an unterschiedliche Kommunikationssysteme angepasst werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

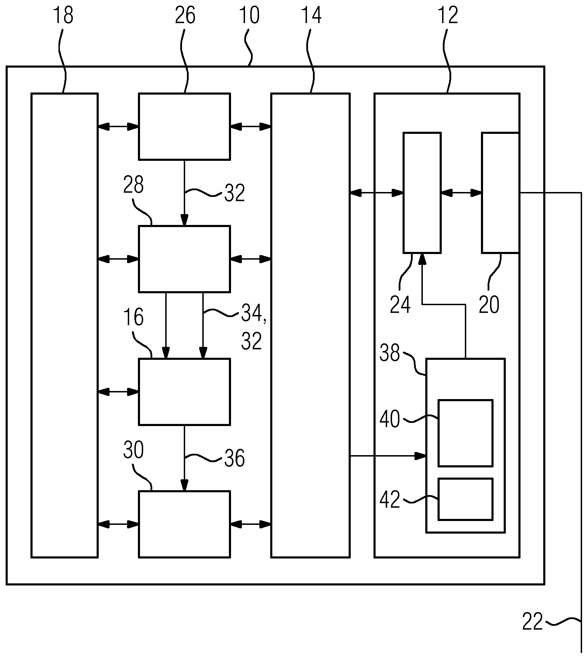

Es zeigt
- FIG 1: die prinzipielle Gerätearchitektur eines Automatisierungsgeräts in Form eines Blockschaltbilds.

FIG 1 zeigt schematisch vereinfacht anhand eines Blockschaltbilds die prinzipielle Gerätearchitektur eines hier in Rede stehenden Automatisierungsgerätes 10, insbesondere einer Antriebssteuerungseinheit. Danach umfasst das Automatisierungsgerät 10 eine Kommunikationsbaugruppe 12, eine interne Datenschnittstelle 14 (internes verallgemeinertes Dateninterface), eine hier und im Folgenden als interne Zustandsmaschine 16 bezeichnete Zustandsmaschine sowie eine Funktionalität 18 zur Implementierung der eigentlichen Gerätefunktionen, also zum Beispiel zur Implementierung der für eine Antriebssteuerungseinheit notwendigen Funktionen.

Zur kommunikativen Verbindbarkeit des Automatisierungsgerätes 10 mit anderen, nicht dargestellten Automatisierungsgeräten ist eine externe Datenschnittstelle 20 vorgesehen. Mittels der externen Datenschnittstelle 20 ist das Automatisierungsgerät 10 an einen Feldbus 22 anschließbar. Im Anschluss an die externe Datenschnittstelle 20 befindet sich eine Kommunikationseinheit 24 zur Implementation des jeweiligen Geräteprofils, also zum Beispiel zur Implementation eines sogenannten Profi-Drive-Profils, wenn das Automatisierungsgerät 10 über den Feldbus 22 an ein Kommunikationssystem nach dem Profibus- oder Profinet-Standard angeschlossen werden oder anschließbar sein soll.

Beim Datenaustausch mit anderen Automatisierungsgeräten werden die Daten an der externen Datenschnittstelle 20 empfangen und durch die Kommunikationseinheit 24 entsprechend dem jeweiligen Kommunikationssystem/Geräteprofil aufbereitet. Eine noch weitergehende Abstraktion der empfangenen Daten findet durch die interne Datenschnittstelle 14 statt. Von dort erfolgt ein Zugriff auf einen Fehlerhandler 26 und dessen Fehlermeldungen, zyklische Prozessdaten 28 sowie Parameter und azyklische Daten 30. Die Funktionalität 18 zur Implementierung der eigentlichen Gerätefunktionen greift auf diese Daten zu und abhängig davon ergibt sich die Funktion des Automatisierungsgerätes 10 und damit in an sich bekannter Art ein Einfluss auf einen jeweiligen, nicht dargestellten technischen Prozess (jeweils graphisch veranschaulicht durch die Doppelpfeile).

Für die interne Zustandsmaschine 16 fließen in deren Bildung von Zustandsinformationen für das Automatisierungsgerät zum Beispiel Fehlerflags 32 und/oder Steuerworte 34 ein. Aufgrund solcher Daten und Daten, die von der Funktionalität 18 zur Implementierung der eigentlichen Gerätefunktionen bereitgestellt werden, ermittelt die interne Zustandsmaschine 16 den jeweiligen Gerätezustand und stellt diesen in kodierter Form anhand einer Zustandsnummer 36 als Bestandteil der Parameter und azyklische Daten 30 zur Verfügung. Von dort wird der jeweilige Zustand in Form der zugehörigen Zustandsnummer 36 über die interne Datenschnittstelle 14 auch der Kommunikationseinheit 24 zur Verfügung gestellt, so dass die kommunikative Verbindung von und zu anderen Automatisierungsgeräten auf den jeweiligen Gerätezustand abgestellt werden kann.

Bei einem Anschluss des Automatisierungsgerätes 10 an ein Kommunikationssystem, für das die internere Zustandsmaschine 16 und sonstige Funktionalität des Automatisierungsgerätes 10 bei dessen Entwicklung ausgelegt wurde, entspricht die prinzipielle Funktionalität des Automatisierungsgerätes 10 in groben Zügen dem, was bisher beschrieben wurde. Wenn das Automatisierungsgerät 10 allerdings an ein anderes Kommunikationssystem angeschlossen werden soll, wird sich mit großer Wahrscheinlichkeit ergeben, dass das Kommunikationssystem, also die für dessen Verwendung angepasste Kommunikationseinheit 24, andere Zustandsinformationen benötigt, als dies bei der ursprünglichen Konfiguration und dem dort vorgesehenen Kommunikationssystem der Fall war.

Dafür ist jetzt eine Abbildungseinheit 38 vorgesehen, die Zustandsinformationen, z.B. die von der internen Zustandsmaschine 16 erzeugte Zustandsnummer 36 sowie Fehlerflags 32, Steuerworte 34, etc., über die interne Datenschnittstelle 14 erhält. Auf dieser Basis stellt die Abbildungseinheit 38 der Kommunikationseinheit 24 die angepassten Zustandsinformationen zur Auswertung in der Kommunikationsbaugruppe 12 bereit.

Die Abbildungseinheit 38 nimmt dabei eine Abbildung der erhaltenen Daten auf Daten, wie sie für die Kommunikationsbaugruppe 12 und/oder deren Kommunikationseinheit 24 je nach Art des jeweiligen Kommunikationssystems benötigt werden, vor. Bei einer Anpassung eines Automatisierungssystems 10 an ein bisher nicht verwendetes Kommunikationssystem ist damit in erster Näherung nur eine Anpassung der durch die Abbildungseinheit 38 vorgenommenen Abbildung interner Zustände und sonstiger Daten auf die für das Kommunikationssystem benötigten Daten notwendig.

Die Funktionalität der Abbildungseinheit 38 kann je nach Anwendungssituation, also je nach zu verwendendem Kommunikationssystem, komplex oder trivial sein. Zum Beispiel kann die Abbildungseinheit eine Verknüpfungslogik 40 umfassen, mit der die internen Zustände des Automatisierungsgerätes 10 auf für das Kommunikationssystem benötigte Zustände abgebildet werden. Je nach Anzahl der möglichen internen Zustände ergibt sich dabei eine einfache oder eine umfangreiche Verknüpfungslogik 40, die sich hinsichtlich ihrer prinzipiellen Funktionalität für einzelne, fiktive Zustände auch wie folgt darstellen lässt:

| Aktueller interner Zustand | Abbildungsergebnis |
|---|---|
| A | a |
| B | b |
| C | c |
| - | a |

Dabei stehen die Buchstaben "A", "B" und "C" exemplarisch für interne Zustände des Automatisierungsgerätes 10 und die diesbezüglichen Zustandsnummer, wobei "-" einen beliebigen Zustand und eine beliebige Zustandsnummer darstellt.

Die Abbildung kann genauer erfolgen, wenn nicht nur der jeweilige aktuelle Zustand sondern auch ein zeitlich vorangehender Zustand berücksichtigt wird. Zeitlich vorangehend kann dabei unmittelbar zeitlich vorangehend meinen, also zum Beispiel einen bei einem vorangehenden Gerätetakt anstehenden Zustand, oder auch den letzten anderen Zustand. Die Abbildungseinheit 38 kann solche aufeinander folgenden Zustände zusammenfassen und darauf basierend eine Zustandsinformation erzeugen und der Kommunikationseinheit 24 bereitstellten.

Eine besondere Ausführungsform der Abbildungseinheit 38 zeichnet sich dabei dadurch aus, dass diese die von der internen Zustandsmaschine 16 erhaltenen Zustände in einem Zwischenspeicher 42 zwischenspeichert und anhand der zwischengespeicherten Zustände neben dem jeweiligen aktuellen Zustand auch vorangehende Zustände bei der Bereitstellung von Zustandsinformationen berücksichtigt. Nachfolgend ist dazu wie oben in Form einer Tabelle die grundsätzliche Funktionalität der Verknüpfungslogik 40 gezeigt, wobei die Verknüpfungslogik die Zusammenfassung zweier interner Zustände (aktueller Zustand und vorangegangener (alter) Zustand) zu genau einem Zustand für die Kommunikationsbaugruppe 12 bewirkt:

| Aktueller interner Zustand | vorangehender interner Zustand | Abbildungsergebnis |
|---|---|---|
| A | A | a |
| A | B | a |
| B | A | b |
| B | B | b |
| C | A | c |
| usw. | usw. | usw. |

Dies ist ein Beispiel für eine Funktionalität der Abbildungseinheit 38, bei der diese einen von der internen Zustandsmaschine 16 erhaltenen, aktuellen Zustand und einen zwischengespeicherten Zustand (vorangehender interner Zustand) zur Generierung eines zusammengefassten Zustands verwendet.

Ähnlich wie eine Zusammenfassung zweier oder mehrerer interner Zustände zu einem Zustand zur Bereitstellung an die Kommunikationseinheit 24 möglich ist, ist bei einer ergänzten oder alternativen Ausführungsform der Abbildungseinheit 38 eine Aufspaltung von internen Zuständen in eine Mehrzahl von Zuständen für die Kommunikationsbaugruppe 12 möglich. Dazu ist auf Basis der beiden oben verwendeten Tabellen eine weitere Tabelle zur Funktionalität der Abbildungseinheit 38 gezeigt, wobei aus Platzgründen die Spaltenüberschriften abgekürzt sind und "akt. int. Zustand" für "aktueller interner Zustand", "vor. int. Zustand" für "vorangehender interner Zustand", "Abb.-Erg." für "Abbildungsergebnis" und "Bed." für "Bedingung" steht. Bei einer derartigen Bedingung handelt es sich um einen geeignete Zusatzinformation, also zum Beispiel den Wert des Fehlerflags 32.

| akt. int. Zustand | vor. int. Zustand | Bed. | Abb. Erg. |
|---|---|---|---|
| A | A | x | a |
| A | A | y | b |
| A | B | - | b |
| - | A | x | a |
| - | A | y | b |

Dies ist ein Beispiel für eine Funktionalität der Abbildungseinheit 38, bei der diese einen von der internen Zustandsmaschine 16 erhaltenen, aktuellen Zustand, einen zwischengespeicherten Zustand (vorangehender interner Zustand) und eine Zusatzinformation (Bedingung) zur Generierung eines Zustands aus einer Gruppe von zumindest zwei Zuständen verwendet. Die mindestens zwei Zustände sind hier entweder der Zustand "a" oder der Zustand "b" aus der Menge möglicher Zustände die zumindest die Zustände "a" und "b" umfasst.

Die Funktionalität der Abbildungseinheit 38 ist zum Beispiel in Software implementiert, so dass die Abbildungseinheit eine Verarbeitungseinheit nach Art eines Mikroprozessors oder dergleichen und einen Speicher umfasst, in den ein von einer Verarbeitungseinheit nach Art eines Mikroprozessors ausführbares Computerprogramm zur Realisierung von Abbildungen von internen Zuständen auf Zustandsinformationen für die Kommunikationsbaugruppe 12, wie hier grundsätzlich beschrieben, geladen werden kann oder ladbar ist. Die Funktionalität der Abbildungseinheit kann auch in Form eines ASICs oder dergleichen realisiert sein. Die Funktionalität des ASICs soll für die Auslegung der nachfolgenden Patentansprüche als Computerprogramm gelten, wobei der ASIC dann ein Beispiel für eine Verarbeitungseinheit nach Art eines Mikroprozessors darstellt.

## Patentansprüche

1. Verfahren zum Betrieb eines Automatisierungsgerätes (10), insbesondere einer Antriebssteuerungseinheit,
- wobei das Automatisierungsgerät (10) eine interne Zustandsmaschine (16), eine interne Datenschnittstelle (14), eine Abbildungseinheit (38) und eine Kommunikationsbaugruppe (12) mit einer externen Datenschnittstelle (20) umfasst,
- wobei die interne Datenschnittstelle (14) hinsichtlich eines Informationsflusses im Automatisierungsgerät (10) zwischen der internen Zustandsmaschine (16) und der Abbildungseinheit (38) und die Abbildungseinheit (38) hinsichtlich desselben Informationsflusses zwischen der internen Datenschnittstelle (14) und der externen Datenschnittstelle (20) liegt,
- wobei Zustände der internen Zustandsmaschine (16) über die interne Datenschnittstelle (14) an die Abbildungseinheit (38) geleitet werden und
- wobei die Abbildungseinheit (38) Zustandsinformationen in Form eigener, aus den erhaltenen Zuständen gewonnener Zustandsinformationen an einer Kommunikationseinheit (24) der Kommunikationsbaugruppe (12) bereit stellt, **dadurch gekennzeichnet, dass**
- die Abbildungseinheit (38) von der internen Zustandsmaschine (16) erhaltene Zustände in einem Zwischenspeicher (42) zwischenspeichert und die Abbildungseinheit (38), neben dem jeweiligen aktuellen Zustand, auch gespeicherte, vorangehende Zustände bei der Bereitstellung von Zustandsinformationen berücksichtigt und
- die Abbildungseinheit (38) einen von der internen Zustandsmaschine (16) erhaltenen, aktuellen Zustand und einen zwischengespeicherten, vorangehenden Zustand zur Generierung einer der gewonnenen Zustandsinformationen verwendet.

2. Verfahren nach Anspruch 1, wobei neben Zuständen der internen Zustandsmaschine (16) auch weitere Zusatzinformationen über die interne Datenschnittstelle (14) an die Abbildungseinheit (38) geleitet werden und wobei die Abbildungseinheit (38) auch Zusatzinformationen bei der Bereitstellung von Zustandsinformationen berücksichtigt.

3. Verfahren nach Anspruch 2, wobei die Abbildungseinheit (38) einen von der internen Zustandsmaschine (16) erhaltenen, aktuellen Zustand, einen zwischengespeicherten, vorangehenden Zustand und eine Zusatzinformation zur Generierung eines Zustands aus einer Gruppe von zumindest zwei Zuständen verwendet.

4. Automatisierungsgerät (10) mit Mitteln zur Ausführung des Verfahrens nach einem der vorangehenden Ansprüche.

5. Computerprogramm mit Programmcode-Mitteln, um alle Schritte von jedem beliebigen der Ansprüche 1 bis 3 durchzuführen, wenn das Programm auf einem Automatisierungsgerät (10), insbesondere einer Antriebssteuerungseinheit, ausgeführt wird.

6. Computerprogrammprodukt mit Programmcode-Mitteln, die auf einem computerlesbaren Datenträger gespeichert sind, um das Verfahren nach jedem beliebigen der Ansprüche 1 bis 3 durchzuführen, wenn das Computerprogrammprodukt auf einem Automatisierungsgerät (10), insbesondere einer Antriebssteuerungseinheit, ausgeführt wird.

7. Automatisierungsgerät (10) nach Anspruch 4, mit einem Speicher in den ein Computerprogramm nach Anspruch 5 als Mittel zur Ausführung des Verfahrens nach einem der Ansprüche 1 bis 3 geladen ist.

8. Automatisierungsgerät (10) nach Anspruch 4 oder Anspruch 7, in einer modularen Ausführungsform, bei der die Kommunikationsbaugruppe (12) eine mit dem Automatisierungsgerät (10) lösbar verbindbare Einheit ist.

## Claims

1. Method for operating an automation device (10), in particular a drive control unit,
- wherein the automation device (10) comprises an internal finite state machine (16), an internal data interface (14), a mapping unit (38) and a communication module (12) with an external data interface (20),
- wherein with respect to a flow of information in the automation device (10) the internal data interface (14) lies between the internal finite state machine (16) and the mapping unit (38) and with respect to the same flow of information the mapping unit (38) lies between the internal data interface (14) and the external data interface (20),
- wherein states of the internal finite state machine (16) are routed to the mapping unit (38) via the internal data interface (14) and
- wherein the mapping unit (38) makes state information in the form of separate state information obtained from the received states available to a communication unit (24) of the communication module (12), **characterised in that**
- the mapping unit (38) buffers states received from the internal finite state machine (16) in a buffer (42) and in addition to the respective current state the mapping unit (38) also takes stored preceding states into consideration during the provision of state information and
- the mapping unit (38) uses a current state received from the internal finite state machine (16) and a buffered preceding state to generate one of the items of state information obtained.

2. Method according to claim 1, wherein in addition to the states of the internal finite state machine (16), further additional information is also routed to the mapping unit (38) via the internal data interface (14) and wherein the mapping unit (38) also takes additional information into account during the provision of state information.

3. Method according to claim 2, wherein the mapping unit (38) uses a current state received from the internal finite state machine (16), a buffered, preceding state and additional information to generate a state from a group of at least two states.

4. Automation device (10) with means of executing the method according to one of the preceding claims.

5. Computer program having program code means, in order to implement all steps from any one of claims 1 to 3, if the program is executed on an automation device (10), in particular a drive control unit.

6. Computer program product having program code means, which are stored on a machine-readable data carrier, in order to implement the method according to any one of claims 1 to 3, if the computer program product is executed on an automation device (10), in particular a drive control unit.

7. Automation device (10) according to claim 4, having a memory into which a computer program according to claim 5 is loaded as means to execute the method according to one of claims 1 to 3.

8. Automation device (10) according to claim 4 or claim 7, in a modular embodiment, in which the communication module (12) is a unit which can be detachably connected to the automation device (10) .

## Revendications

1. Procédé pour faire fonctionner un appareil (10) d'automatisation, notamment une unité de commande d'entraînement,
- dans lequel l'appareil (10) d'automatisation comprend une machine (16) d'état interne, une interface (14) de données interne, une unité (38) de reproduction et un module (12) de communication ayant une interface (20) de données externe,
- dans lequel l'interface (14) de données interne se trouve, considéré du point de vue d'un flux d'informations, dans l'appareil (10) d'automatisation, entre la machine (16) d'état interne et l'unité (38) de reproduction et l'unité (38) de reproduction se trouve, considéré du point de vue de ce flux d'informations, entre l'interface (14) de données interne et l'interface (20) de données externe,
- dans lequel on envoie des états de la machine (16) d'état interne à l'unité (38) de reproduction par l'intermédiaire de l'interface (14) de données interne et
- dans lequel l'unité (38) de reproduction met des informations d'état sous forme d'informations d'état recueillies à partir des états obtenus, à disposition d'une unité (24) de communication du module (12) de communication, **caractérisé en ce que**
- l'unité (38) de reproduction mémorise intermédiairement dans une mémoire (42) tampon des états obtenus de la machine (16) d'état interne et l'unité (38) de reproduction, tient compte, outre de l'état présent, également d'états précédents mémorisés, lors de la mise à disposition d'informations d'état et
- l'unité (38) de reproduction utilise, pour produire l'une des informations d'état recueillies, un état présent obtenu de la machine (16) d'état interne et un état précédent mémorisé intermédiairement.

2. Procédé suivant la revendication 1, dans lequel on envoie à l'unité (38) de reproduction par l'interface (14) de données interne, outre des états de la machine d'état interne également d'autres informations supplémentaires, et dans lequel l'unité (38) de reproduction prend en compte également des informations supplémentaires pour mettre à disposition des informations d'état.

3. Procédé suivant la revendication 2, dans lequel l'unité (38) de reproduction utilise un état présent obtenu de la machine (16) d'état interne, un état précédent mémorisé intermédiairement et une information supplémentaire pour produire un état parmi un groupe d'au moins deux états.

4. Appareil (10) d'automatisation ayant des moyens pour effectuer le procédé suivant l'une des revendications précédentes.

5. Programme informatique ayant des moyens de code de programme pour effectuer tous les stades de chacune ou quelconque des revendications 1 à 3, lorsque le programme est réalisé sur un appareil (10) d'automatisation, notamment sur une unité de commande d'un entraînement.

6. Produit de programme informatique ayant des moyens de code de programme, qui sont mémorisés sur des supports de données déchiffrables par ordinateur pour effectuer le procédé suivant chacune ou quelconque des revendications 1 à 3, lorsque le produit de programme informatique est réalisé sur un appareil (10) d'automatisation, notamment sur une unité de commande de l'entraînement.

7. Appareil (10) d'automatisation suivant la revendication 4, comprenant une mémoire, dans laquelle est chargé un programme informatique suivant la revendication 5, comme moyen pour réaliser le procédé suivant l'une des revendications 1 à 3.

8. Appareil (10) d'automatisation suivant la revendication 4 ou suivant la revendication 7, sous une forme de réalisation modulaire, dans lequel le module (12) de communication est une unité pouvant être reliée d'une manière amovible à l'appareil (10) d'automatisation.
